# FASCICULE DE BREVET EUROPEEN

(11) **EP 3 219 541 B1**
(45) Date de publication et mention de la délivrance du brevet: **08.04.2020**
(21) Numéro de dépôt: 17160219.6
(22) Date de dépôt: 10.03.2017
(51) Int. Cl.: B60P 1/02, B60P 3/07, B66F 9/075

(54) **ENSEMBLE DE DEUX VÉHICULES POUR LA DISTRIBUTION D'OBJETS**
ANORDNUNG VON ZWEI FAHRZEUGEN ZUR VERTEILUNG VON GEGENSTÄNDEN
SET OF TWO VEHICLES FOR DISTRIBUTING OBJECTS

(30) Priorité: 14.03.2016 FR 1652101
(43) Date de publication de la demande: 20.09.2017
(73) Titulaire: Central Design, 44100 Nantes (FR)
(72) Inventeur: FOURNIER, Frédéric, 17100 Fontcouverte (FR)
(74) Mandataire: Tournel, Jean Louis

(56) Documents cités:
- DE-A1- 4 231 568
- US-A- 3 561 621
- US-A- 4 239 447
- US-A1- 2006 228 201

## Description

L'invention se rapporte à un ensemble de deux véhicules pour la distribution ou l'approvisionnement de certaines zones par exemple urbaines n'autorisant pas ou ne permettant pas la circulation de camions à moteur à explosion ou supérieur à un poids fixé par les autorités.

Le transport des marchandises en France est réalisé principalement par des poids lourds ou des véhicule utilitaires 3,5 T fonctionnant avec du carburant fossile.

De plus en plus de municipalités souhaitent réduire la circulation en centre-ville et/ou l'utilisation de véhicules diesels et/ou des véhicules de type poids lourds.

La distribution à l'aide de véhicules fonctionnant à l'énergie électrique est bien connue mais l'inconvénient est la faible autonomie de ces véhicules ce qui limite les possibilités.

Il faut donc prévoir des plateformes de distribution en zone périurbaine. Les longs trajets sont confiés aux poids lourds qui approvisionnent les plateformes et ces plateformes approvisionnent des véhicules adaptés pour les zones réglementées.

L'inconvénient est que ces plateformes de distribution nécessitent un investissement pour leur construction, la recherche de terrain disponible et ensuite provoquent une augmentation de la circulation dans la zone d'implantation de la plateforme pouvant conduire à des ralentissements importants.

Certains ont envisagé d'utiliser un camion porteur FR-A- 3.010.955 fonctionnant avec du carburant fossile et dans lequel a été aménagé un espace pour transporter un véhicule électrique plus petit dit navette permettant de transborder les marchandises contenues dans le camion vers le véhicule navette qui va ensuite les distribuer en ville. Le camion porteur transporte au plus près de la zone de distribution la marchandise et joue le rôle d'une plateforme de distribution mobile.

La navette est placée dans le camion transversalement à l'axe longitudinal dudit camion qui est son axe habituel de déplacement.

Des rampes situées de part et d'autre de l'emplacement réservé à la navette permettent à celle-ci de monter et descendre du camion tant pour se ranger que pour charger des marchandises à distribuer.

La navette doit être homologuée pour circuler en ville ce que ne peut pas faire un chariot élévateur de transbordement.

Cette solution empiète sur le volume clos du camion. Elle oblige la navette à systématiquement monter et descendre du camion donc à réaliser des rampes d'accès longues pour une pente pas trop importante. Ensuite lorsque le camion est garé le long de la route, il faut faire très attention lorsque la navette sort du camion et se trouve sur la chaussée perpendiculairement au sens de déplacement des véhicules sur la chaussée. Ce type d'ensemble ne permet plus au camion d'être chargé par l'arrière comme le font les camions en positionnant le bord arrière dudit camion contre un quai de chargement. Ce type d'ensemble est aussi connu de US 4 239 447 A.

Il est connu DE 2010 004 486, US 4 266 795, WO 01/21523, EP-A-0810123 d'utiliser la fourche de manutention qui équipe souvent l'avant des engins de manutentions pour se hisser sur le camion à l'arrière mais il n'est pas toujours utile d'avoir cette fourche car elle cela présente un risque accentué d'accident sur route normale et les autorités évitent de les homologuer pour circuler en tout lieu. Lorsqu'on utilise la fourche pour s'accrocher tout le poids s'exerce sur la fourche et la navette est parallèle à l'axe longitudinal du véhicule porteur. Les efforts subis conduisent à une usure prématurée de la fourche.

L'invention se propose d'apporter une solution pour la distribution de marchandises.

A cet effet, l'invention a pour objet un ensemble de deux véhicules selon la revendication 1 pour distribuer des objets contenus dans un des dits véhicules comprenant un premier véhicule dit porteur apte à transporter les objets sur une grande distance ainsi qu'à transporter un véhicule dit navette dépourvu de fourche de préhension destiné à transporter les objets sur une plus petite distance cet ensemble de véhicule étant caractérisé en ce que pour le transport, la navette est rangée transversalement à l'arrière du véhicule porteur extérieurement et à cet effet le véhicule porteur comprend à l'arrière dudit véhicule porteur, à l'extérieur de la carrosserie un moyen d'appui pour un moyen d'accrochage que présente le véhicule navette et le véhicule navette comprend des moyens moteurs pour se déplacer d'une position haute où la navette est suspendue au moyen d'appui du véhicule porteur et n'est plus en contact avec le sol vers une position basse où la navette est en contact avec le sol pour se déplacer et inversement.

L'invention sera bien comprise à l'aide de la description ci-après faites à titre d'exemple non limitatif en regard du dessin qui représente :
FIG 1 : ensemble de deux véhicules en position circulation
FIG 2 Déchargement de l'un des véhicules de la figure 1
FIG 3 le véhicule dit porteur en attente de recevoir le véhicule navette
FIG 4 le véhicule navette
FIG 5 : le véhicule navette se décrochant
FIG 6 : vue de dessus du véhicule porteur montrant une possibilité des bras arrières
FIG 7 Cinématique d'accostage du véhicule navette pour transfert d'objet.
FIG 8 Une navette avec un autre type de moyens de levage
FIG 9 : Une variante de la navette de la figure 4
FIG 10 la cinématique d'accrochage de la navette sur le véhicule porteur pour le transfert de marchandise
FIG 11 L'accrochage de la navette de la figure 9
FIG 12 détail de la figure 11.

En se reportant au dessin, on voit un système d'approvisionnement de marchandises conçu pour permettre la distribution dans des zones à accès réglementés. Ce système est fondé sur l'utilisation d'un ensemble 1 de deux véhicules 2,3.

Cet ensemble 1 comprend un véhicule 2 dit porteur apte à transporter les marchandises sur de grandes distances et fonctionnant au combustible fossile et d'un véhicule 3 dit navette de préférence électrique pouvant se déplacer dans certaines zones réglementées ou à voies étroites. Cette navette 3 comprend un châssis 4 porté par des roues 5 avec leurs suspensions, une cabine 6 pour le conducteur et un plateau 7 de charge pour recevoir la marchandise, elle ne comporte pas de fourche de préhension ni à l'avant ni à l'arrière.

Ce véhicule navette 3 est homologué pour circuler sur les voies de circulation. Avantageusement, pour le transport, la navette est rangée transversalement à l'arrière du véhicule porteur extérieurement et à cet effet le véhicule 2 porteur comprend à l'arrière dudit véhicule porteur à l'extérieur de la carrosserie un moyen 8 d'appui pour un moyen 9 d'accrochage que présente le véhicule navette 3 et le véhicule navette comprend des moyens 10 moteurs pour se déplacer d'une position haute où la navette est suspendue au moyen 8 d'appui du véhicule porteur et n'est plus en contact avec le sol vers une position basse où la navette est en contact avec le sol pour se déplacer au sol et inversement.

Selon cette solution c'est un moyen 10 moteur installé sur la navette qui permet d'accrocher ou de décrocher la navette et donc de la déplacer verticalement en prenant appui sur le sol pour être ensuite maintenue suspendue à des moyens d'appui que présente l'arrière du véhicule porteur.

La navette est de dimension réduite c'est-à-dire que sa longueur n'excède pas la largeur autorisée pour les véhicules habituellement en circulation qui est de l'ordre de 2,55 m.

Pour son chargement sur le véhicule porteur, la navette se positionne contre la face arrière du véhicule porteur de sorte que son axe longitudinal soit perpendiculaire à l'axe longitudinal du véhicule porteur. La navette se range transversalement au véhicule porteur.

Les moyens 8 d'appui présentés par le véhicule porteur comprennent au moins un bras 8 mobile rectiligne et de préférence deux bras mobiles entre une position dite neutre où ils sont parallèles à l'axe longitudinal du porteur et sont intégrés dans le gabarit dudit porteur et une position dite de transport ou ces bras 8 sont sortis partiellement du gabarit pour rendre accessible les appuis faisant saillis à l'arrière du véhicule porteur. Ces bras coulissent dans un fourreau soudé au châssis et par exemple sous le plancher du véhicule porteur. La pose des bras 8 porteurs peut être fait sur tout véhicule existant ou à construire. Avant de sortir les bras, la navette doit être positionnée au plus près de l'arrière du camion et transversalement.

Sur les bras sortis s'engagent des moyens 9 d'accrochage que présente la navette et pour ce faire, il y a plusieurs possibilités.

Dans une forme de réalisation, les organes 9 d'accrochage sont associés à une partie fixe de la navette et cette navette comprend des moyens 11 de levage venant en appui au sol pour soulever la navette à une hauteur suffisante pour engager les bras avec la navette et ainsi l'écarter du sol. Ces moyens de levage venant en appui sur le sol sont ensuite rétractés afin de laisser la navette suspendue.

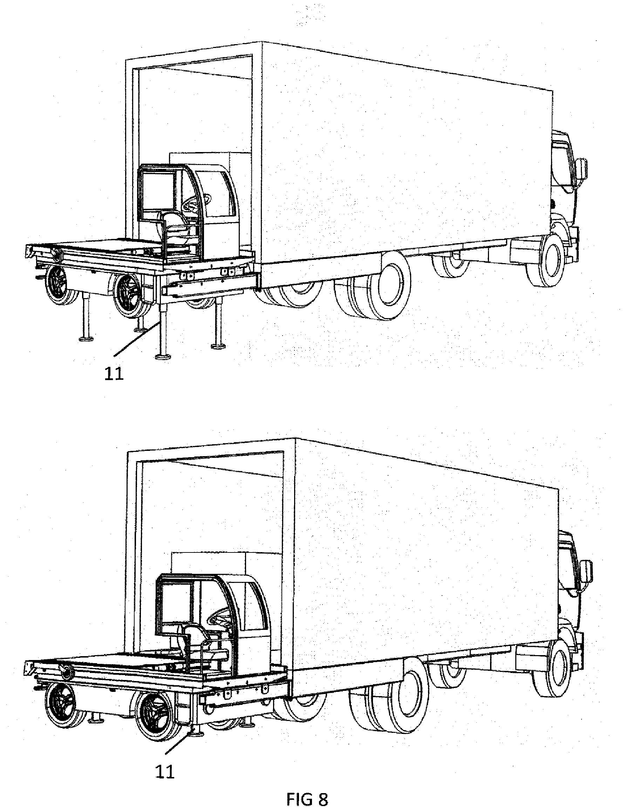

Par exemple figure 8 pour faire varier la distance entre les moyens d'accrochage de la navette et le plan de contact de ses roues avec le sol, la navette dispose de vérins qui dirigés vers le sol viennent dans un premier temps au contact du sol puis lèvent l'ensemble de la navette pour amener les moyens d'accrochage à une hauteur suffisante pour coopérer avec les bras du véhicule porteur qui sont sortis après positionnement de la navette.

Une solution intéressante consiste à équiper la navette d'un plateau 7 de charge monté mobile verticalement ce plateau étant équipé des moyens 9 d'accrochages.

Pour accrocher la navette, on lève le plateau de charge à une hauteur suffisante pour engager les bras 8, puis on baisse le plateau 7 ce qui provoque après appui sur les bras du plateau le déplacement vers le haut du bas de la navette.

Les moyens 9 d'accrochage peuvent consister en des anneaux dans lesquels se glissent les bras du porteur ou des crochets en U renversés qui viennent chapeauter les bras. Ces crochets en U ont une ouverture plus large que leur fond afin de faciliter la mise en place.

Des verrous sécurisent l'accrochage.

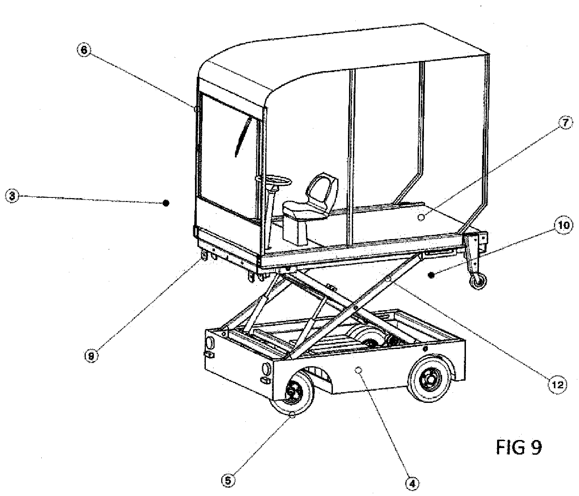

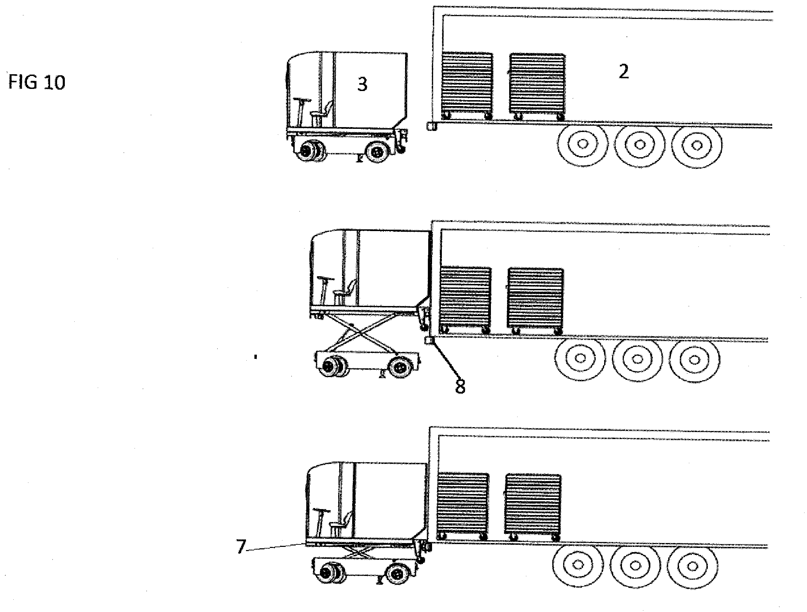

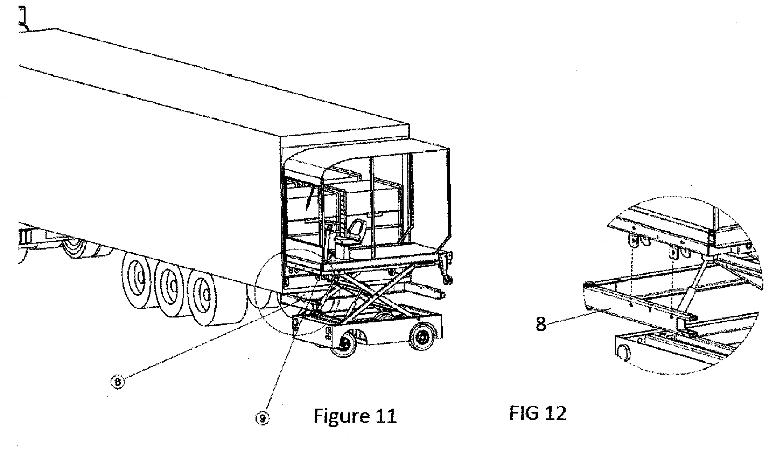

Le véhicule navette comprend un châssis porté par des roues et un plateau 7 de charge qui est actionné par un mécanisme en X. Ce plateau qui intègre le poste de pilotage (fig 9 à 12) s'étend sur toute la surface du véhicule.

On notera que ce plateau est fractionné en deux parties l'une avant réservée au poste de pilotage et une arrière réservée aux charges à transporter. Ce plateau se situe au-dessus du châssis et non pas en porte à faux avant comme le serait la fourche d'un gerbeur.

Deux cotés du cadre présentent les moyens 9 d'accrochage. Ces moyens d'accrochage sont situés à l'avant et à l'arrière de la navette sur les petits côtés du cadre rectangulaire du plateau. Cela augmente la stabilité lors du transport du fait de l'écartement.

Les moyens d'accrochage se situent sur les petits côtés d'un cadre portant le plateau de charge mais pourraient se situer dans l'épaisseur du plateau de chargement ou sous le dit plateau.

La position des moyens 9 d'accrochage aux deux extrémités du cadre présente un intérêt pour le chargement ou le déchargement. Le centre de gravité de la navette est situé entre les moyens d'accrochage alors que sur les véhicules gerbeurs à fourche suspendus par la fourche , le centre de gravité est en dehors de la fourche.

Les bras 8 du porteur sont non seulement mobiles en translation suivant l'axe longitudinal du porteur, ils sont articulés autour d'un axe 8A vertical pour pouvoir être rabattus contre le bord arrière du porteur afin de servir d'appui pour le plateau de charge lors de son chargement qui vient engager ces moyens d'accrochage sur les bras rabattus. Les bras 8 sont sortis de leurs fourreaux jusqu'à la sortie de l'articulation d'axe 8A.Un verrouillage maintient les bras rabattus.

Cette reprise de charge, lorsque la navette vient en appui sur les bras rabattus évite au plateau de charge de la navette de bouger au moment du transfert des marchandises d'un véhicule à l'autre. Cela évite la compression des amortisseurs de la navette lorsque le plateau reçoit la charge et la continuité du plan de déplacement de la marchandise est garantie (il n'y a pas création d'une marche lorsque l'on passe d'un véhicule à l'autre).

On a donc réalisé une plateforme de distribution mobile pouvant se stationner à n'importe quel emplacement pouvant se charger sur l'arrière ou sur le côté.

Le véhicule porteur peut se charger par l'arrière sur un quai et se décharger également par l'arrière avec le véhicule navette pouvant aborder le véhicule porteur soit en marche arrière soit latéralement. Lorsque la navette est chargée par l'arrière. Ceci permet à la navette de charger et décharger en circulant dans le sens de circulation sans avoir à prévoir autour du porteur un espace suffisant pour se positionner transversalement à l'axe du porteur. Donc en sortant de sa position de charge, la navette n'a pas à empiéter sur la voie de circulation parallèle à la position du porteur Les bras sont faciles à installer sur le châssis d'un camion qui demande peu de transformation.

L'utilisation du plateau mobile à hauteur variable permet de positionner le plateau à différentes hauteurs donc compatible avec différents type de véhicule porteur et de surcroit le moteur de manœuvre du plateau permet l'accrochage.

La navette se range à l'arrière du porteur à l'extérieur de la carrosserie. On monte le plateau ou le châssis jusqu'à la hauteur souhaitée, on engage les bras dans les anneaux ou crochets de la navette et on soulève la navette en descendant le plateau ou on retire le soutient au sol pour que la navette soit suspendue. Des moyens d'attache de sécurité reprennent une partie de la charge du châssis de la navette lorsqu'elle est suspendue pour que les organes d'accrochage du plateau mobile ne soient pas sollicités lors du transport ou le mécanisme du plateau de charge.

Le porteur peut se charger et décharger traditionnellement en accostant les quais de chargement par l'arrière sous réserve que les bras ont été rentrés dans les fourreaux ou que la navette ne soit pas suspendue.

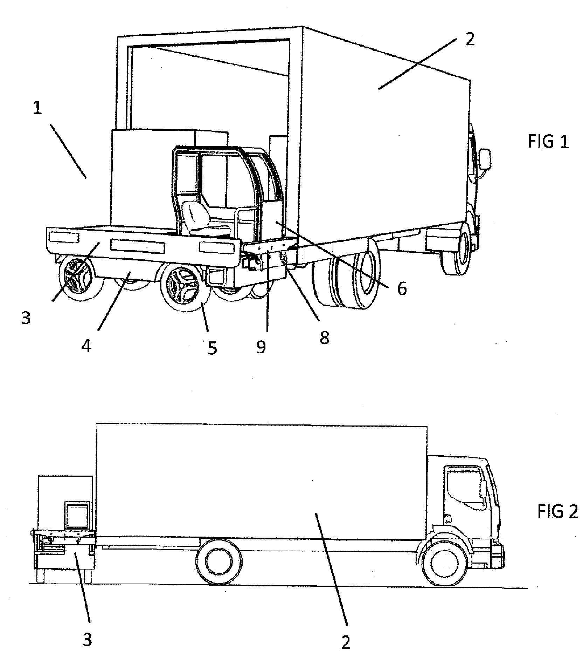

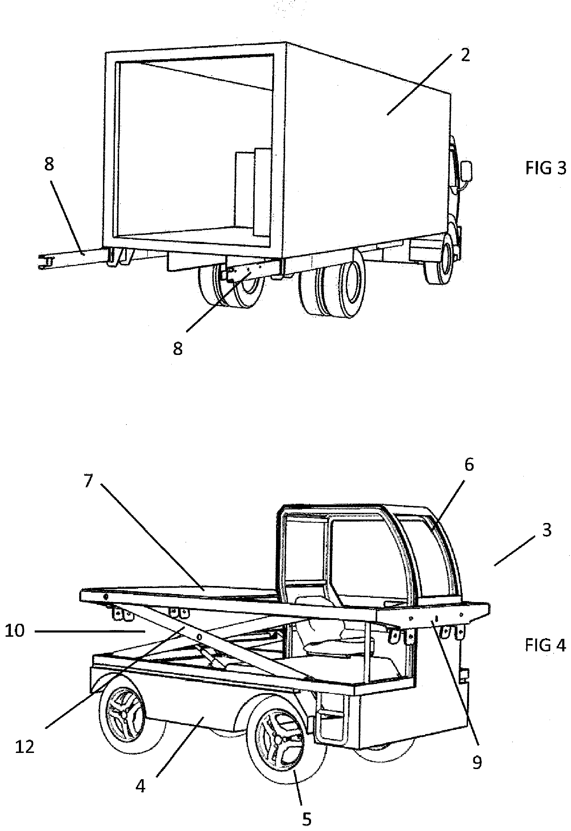

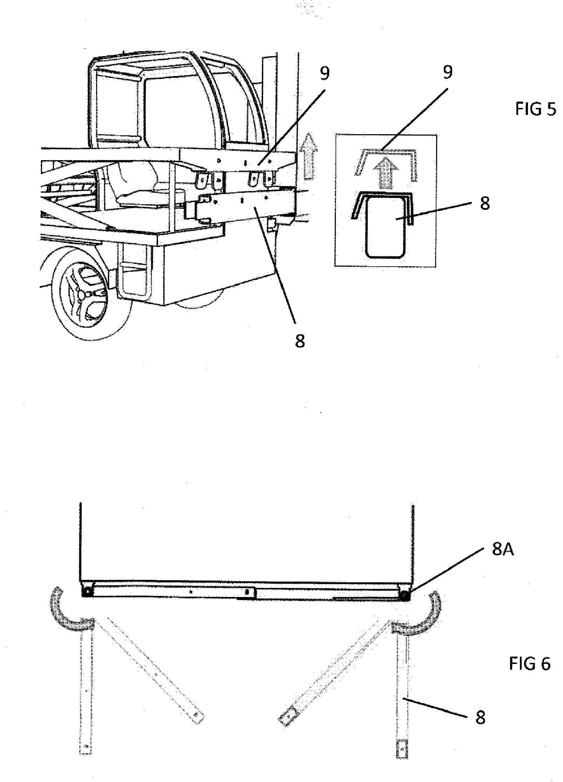

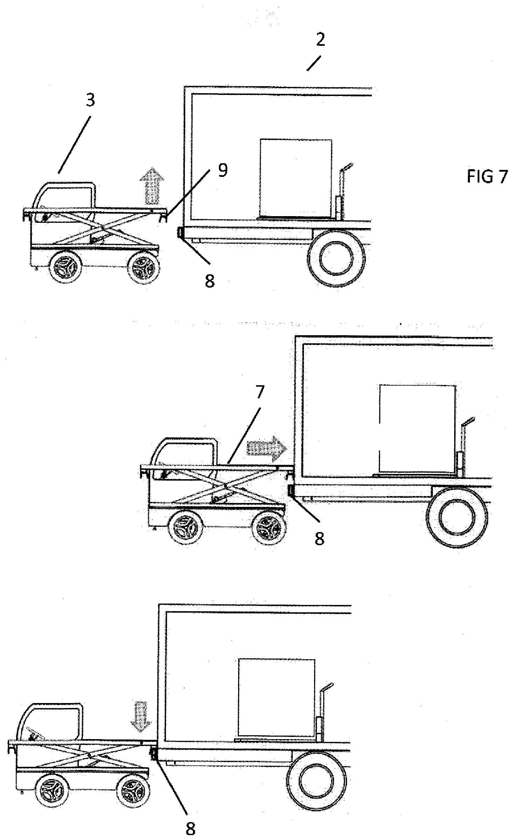

Les figures 1 à 8 montrent une navette où le poste de pilotage est fixe par rapport au châssis qui porte les roues avec un plateau 7 qui présente à l'avant une découpe pour l'implantation d'une cabine de conduite fixe.

## Revendications

1. Ensemble de deux véhicules pour distribuer des objets contenus dans un des dits véhicules comprenant un premier (2) véhicule dit porteur apte à transporter les objets sur une grande distance ainsi qu'à transporter un véhicule (3) dit navette équipée d'un poste de conduite destiné à transporter les objets sur une plus petite distance, ensemble dans lequel, pour le transport, la navette est rangée transversalement à l'arrière du véhicule porteur extérieurement contre la face arrière et à cet effet le véhicule (2) porteur comprend à l'arrière dudit véhicule porteur à l'extérieur de la carrosserie un moyen (8) d'appui pour un moyen (9) d'accrochage que présente le véhicule navette qui, est dépourvu de fourche de préhension, l'ensemble étant **caractérisé en ce que** le véhicule navette comprend un châssis et un plateau (7) de charge mobile verticalement le plateau présentant les moyens (9) d'accrochage pour les moyens ( 8) d'appui et le véhicule navette comprend des moyens (10) moteurs pour se déplacer d'une position haute où la navette est suspendue aux moyens (8) d'appui du véhicule porteur et n'est plus en contact avec le sol vers une position basse où la navette est en contact avec le sol pour se déplacer sur le sol et inversement.

2. Ensemble de deux véhicules selon la revendication 1 **caractérisé en ce que** les moyens (8) d'appui présentés par le véhicule porteur comprennent deux bras mobiles entre une position dite neutre où ils sont parallèles à l'axe longitudinal du porteur et sont intégrés dans le gabarit dudit porteur et une position dite de transport où ces bras (8) sont sortis partiellement du gabarit par translation pour rendre accessible les appuis faisant saillis à l'arrière du véhicule porteur et ces bras (8) sont articulés autour d'un axe (8A) vertical pour pouvoir être rabattus contre le bord arrière du porteur afin de servir d'appui pour le plateau (7) de charge lors de son chargement qui vient engager ces moyens (9) d'accrochage sur les bras 8 rabattus.

3. Ensemble de deux véhicules selon la revendication 2 **caractérisé en ce que** les moyens (9) d'accrochage peuvent consister en des anneaux dans lesquels se glissent les bras (8) du porteur ou des crochets en U renversés qui viennent chapeauter les bras (8).

4. Ensemble de deux véhicules selon la revendication 1 **caractérisé en ce que** cette navette comprend des moyens (11) de levage venant en appui au sol pour soulever la navette à une hauteur suffisante pour engager les bras avec les moyens 9 d'accrochage de la navette pour ainsi l'écarter du sol.

5. Ensemble de deux véhicules selon la revendication 4 **caractérisé en ce que** la navette dispose de vérins qui dirigés vers le sol viennent dans un premier temps au contact du sol puis lèvent l'ensemble de la navette pour amener les moyens (9) d'accrochage à une hauteur suffisante pour coopérer avec les bras du véhicule porteur.

6. Ensemble de deux véhicules selon la revendication 1 **caractérisé en ce que** les moyens 9 d'accrochage se situent sur les petits côtés d'un cadre portant le plateau (7) de charge.

7. Ensemble de deux véhicules selon la revendication 6 **caractérisé en ce que** le plateau (7) de charge est actionné par un mécanisme en X.

8. Ensemble de deux véhicules selon l'une quelconque des revendications précédentes **caractérisé en ce que** des moyens d'attache de sécurité reprennent une partie de la charge du châssis de la navette lorsqu'elle est suspendue.

## Patentansprüche

1. Einheit von zwei Fahrzeugen zum Verteilen von Gegenständen, die in einem der besagten Fahrzeuge enthalten sind, umfassend ein erstes (2) sogenanntes Trägerfahrzeug, welches dazu geeignet ist, die Gegenstände über eine große Distanz zu transportieren, und auch ein mit einer Fahrerkabine ausgestattetes, sogenanntes Zubringerfahrzeug (3) zu transportieren, welches dafür bestimmt ist, die Gegenstände über eine kürzere Distanz zu transportieren, wobei bei der Einheit der Zubringer für den Transport hinten am Trägerfahrzeug äußerlich gegen die hintere Stirnfläche quer verstaut ist, und hierzu das Trägerfahrzeug (2) hinten am besagten Trägerfahrzeug an der Außenseite der Karosserie ein Stützmittel (8) für ein Einhängemittel (9) umfasst, welches das Zubringerfahrzeug, welches keine Greifgabel besitzt, aufweist, wobei die Einheit **dadurch gekennzeichnet ist, dass** das Zubringerfahrzeug ein Fahrgestell und eine vertikal bewegliche Ladeplatte (7) umfasst, wobei die Platte die Einhängemittel (9) für die Stützmittel (8) aufweist und das Zubringerfahrzeug die motorischen Mittel (10) aufweist, um sich von einer hohen Position, in welcher der Zubringer an den Stützmitteln (8) des Trägerfahrzeugs aufgehängt und mit dem Untergrund nicht mehr in Kontakt ist, in Richtung einer tiefen Position, in welcher der Zubringer mit dem Untergrund zum sich Fortbewegen auf dem Untergrund in Kontakt ist, zu bewegen, oder umgekehrt.

2. Einheit von zwei Fahrzeugen gemäß Anspruch 1, **dadurch gekennzeichnet, dass** die vom Trägerfahrzeug aufgewiesenen Stützmittel (8) zwei Arme umfassen, die zwischen einer sogenannten Neutralposition, in welcher sie parallel zur Längsachse des Trägers sind und in den Abmessungen des besagten Trägerfahrzeugs integriert sind, und einer so genannten Transportposition, in welcher diese Arme (8) teilweise über die Abmessungen herausstehen durch Translation beweglich sind, um die hinten am Trägerfahrzeug vorstehenden Stützen zugänglich zu machen, und diese Arme (8) um eine Vertikalachse (8A) angelenkt sind, um gegen den hinteren Rand des Trägerfahrzeugs umgeklappt werden zu können, um als Stütze für die Ladeplatte (7) bei seiner Beladung zu dienen, welche diese Einhängemittel (9) mit der Oberseite der umgeklappten Arme (8) in Eingriff bringt.

3. Einheit von zwei Fahrzeugen gemäß Anspruch 2, **dadurch gekennzeichnet, dass** die Einhängemittel (9) aus Ringen bestehen können, in welche die Arme (8) des Trägers oder am Ende der Arme (8) vorhandene, als umgedrehtes U gebildete Haken, hineingleiten.

4. Einheit von zwei Fahrzeugen nach dem Anspruch 1, **dadurch gekennzeichnet, dass** dieser Zubringer sich am Untergrund abstützende Hubmittel (11) umfasst, um den Zubringer auf eine Höhe zu heben, die genügt, um die Arme mit den Einhängemitteln 9 des Zubringers in Eingriff zu bringen, um ihn so vom Untergrund zu beabstanden.

5. Einheit von zwei Fahrzeugen gemäß Anspruch 4, **dadurch gekennzeichnet, dass** der Zubringer über Zylinder verfügt, die gegen den Boden gerichtet zunächst mit dem Untergrund in Kontakt kommen, dann den ganzen Zubringer heben, um die Einhängemittel (9) auf eine Höhe zu bringen, die zur Kooperation mit den Armen des Trägerfahrzeugs genügt.

6. Einheit von zwei Fahrzeugen gemäß Anspruch 1, **dadurch gekennzeichnet, dass** sich die Einhängemittel (9) an den kurzen Seiten eines Rahmens befinden, welcher die Ladeplatte (7) trägt.

7. Einheit von zwei Fahrzeugen gemäß Anspruch 6, **dadurch gekennzeichnet, dass** die Ladeplatte (7) von einem X-förmigen Mechanismus betätigt wird.

8. Einheit von zwei Fahrzeugen nach einem der vorhergehenden Ansprüche, **dadurch gekennzeichnet, dass** Sicherheitsbefestigungsmittel einen Teil der Last des Fahrgestells des Zubringers tragen, wenn dieser aufgehängt ist.

## Claims

1. A set of two vehicles for distributing objects contained in one of said vehicles, comprising a first vehicle (2), called carrier vehicle, capable of transporting the objects over a long distance as well as of transporting a vehicle (3), called shuttle vehicle, equipped with a driving cab, which vehicle is intended to transport the objects over a shorter distance, in which set, for transportation, the shuttle is transversely stowed at the rear of the carrier vehicle on the outside against the rear face, and to this end the carrier vehicle (2) comprises, at the rear of said carrier vehicle on the outside of the body work, a support means (8) for supporting an attachment means (9) fitted on the shuttle vehicle, which vehicle is not equipped with a handling fork, the set being **characterised in that** the shuttle vehicle comprises a chassis and a vertically movable loading platform (7), the platform having the attachment means (9) for attaching the support means (8) and the shuttle vehicle comprises drive means (10) so that it can move from an upper position, in which the shuttle is suspended from the support means (8) of the carrier vehicle and is no longer in contact with the ground, to a lower position, in which the shuttle is in contact with the ground so that it can move on the ground, and vice versa.

2. The set of two vehicles as claimed in claim 1, **characterised in that** the support means (8) fitted on the carrier vehicle comprises two arms that can move between a position, called neutral position, in which they are parallel to the longitudinal axis of the carrier and are integrated within the framework of said carrier, and a position, called transportation position, in which said arms (8) are partially extended from the framework through a translation movement in order to provide access to the supports projecting at the rear of the carrier vehicle, and said arms (8) are hinged about a vertical axis (8A) in order to be folded against the rear edge of the carrier so as to act as a support for the loading platform (7) when it is loaded, which platform engages its attachment means (9) on the folded arms (8).

3. The set of two vehicles as claimed in claim 2, **characterised in that** the attachment means (9) can be formed by rings, in which the arms (8) of the carrier slide, or by upside down U-shaped hooks, which fit over the arms (8).

4. The set of two vehicles as claimed in claim 1, **characterised in that** said shuttle comprises lifting means (11) that come into abutment on the ground in order to lift the shuttle to a sufficient height for engaging the arms with the attachment means (9) of the shuttle so as to thus move it away from the ground.

5. The set of two vehicles as claimed in claim 4, **characterised in that** the shuttle has jacks, which jacks, when they are directed towards the ground, initially come into contact with the ground, then lift the whole shuttle in order to bring the attachment means (9) to a sufficient height for engaging with the arms of the carrier vehicle.

6. The set of two vehicles as claimed in claim 1, **characterised in that** the attachment means (9) are located on the shorter sides of a frame supporting the loading platform (7).

7. The set of two vehicles as claimed in claim 6, **characterised in that** the loading platform (7) is activated by an X-shaped mechanism.

8. The set of two vehicles as claimed in any one of the preceding claims, **characterised in that** safety fastening means take up some of the load of the chassis of the shuttle when it is suspended.
